# EUROPÄISCHE PATENTSCHRIFT

(11) **EP 2 574 228 B1**
(45) Veröffentlichungstag und Bekanntmachung des Hinweises auf die Patenterteilung: **06.01.2016**
(21) Anmeldenummer: 12175230.7
(22) Anmeldetag: 06.07.2012
(51) Int. Cl.: A01D 41/14, A01D 69/06

(54) **Antriebsvorrichtung für eine aus einem Erntevorsatz und einem Schrägförderer bestehende Baugruppe einer selbstfahrenden Erntemaschine**
Drive device for a module of a self-propelled harvesting machine comprising a harvesting header and an inclined feeder
Dispositif d'entraînement pour un composant d'une moissonneuse automobile constitué d'un tablier à coupe et un convoyeur d'alimentation

(30) Priorität: 30.09.2011 DE 102011054096
(43) Veröffentlichungstag der Anmeldung: 03.04.2013
(73) Patentinhaber: CLAAS Selbstfahrende Erntemaschinen GmbH, 33428 Harsewinkel (DE)
(72) Erfinder: Furmaniak, Jan, 48145 Münster (DE)

(56) Entgegenhaltungen:
- EP-A2- 0 777 960
- DE-A1-102006 030 954
- DE-C2- 2 745 564
- US-A- 3 466 854
- US-A- 3 854 572
- US-A1- 2003 093 202

## Beschreibung

Die Erfindung betrifft eine Antriebsvorrichtung für eine aus einem Erntevorsatz und/oder einem Schrägförderer bestehende Baugruppe einer selbstfahrenden Erntemaschine, die eine als Zugmitteltrieb ausgebildete Anordnung mit einer Einrichtung zur stufenlosen Veränderung eines Übersetzungsverhältnisses sowie zumindest ein diesem nachgeschaltetes Untersetzungsgetriebe aufweist.

Derartige Antriebsvorrichtungen kommen bei selbstfahrenden Erntemaschinen zum Einsatz, um eine Antriebsbewegung von einer Antriebsmaschine auf einen jeweiligen Erntevorsatz der Erntemaschine und auch auf einen zwischen dem Erntevorsatz und einem Dreschwerk liegenden Schrägförderer zu übertragen. Je nach Einsatz der selbstfahrenden Erntemaschine ist der Erntevorsatz dabei als Getreideschneidwerk oder Maispflücker, etc. ausgeführt, wobei das über das jeweilige Schneidwerk aufgenommene Erntegut dann durch den Schrägförderer dem Dreschwerk über Einzugsketten und daran befestigten Förderleisten zugeführt wird. Als Übertragungsmittel der Antriebsbewegung kommen dann üblicherweise Zugmitteltriebe zum Einsatz, von welchen häufig einer als Variatorgetriebe ausgestaltet ist, um eine Antriebsdrehzahl stufenlos einstellen zu können. Zudem kann einem derartigen Variatorgetriebe dann ein Untersetzungsgetriebe nachgeschaltet sein, über welches die stufenlos übersetzte Antriebsbewegung weiter untersetzt wird und über das gegebenenfalls eine Drehrichtungsumkehr eingeleitet werden kann, um eine entgegengesetzte Förderbewegung des Schrägförderers darzustellen. Durch diese Maßnahme kann beispielsweise eine im Schrägförderergehäuse aufgetretene Verstopfung gelöst werden.

Die US 3,854,572 beschreibt eine Antriebsvorrichtung, die zum Antrieb eines Erntevorsatzes und eines Schrägförderers einer selbstfahrenden Erntemaschine eingerichtet ist. Die Antriebsanordnung umfasst eine als Zugmitteltrieb ausbildete Anordnung mit einem ersten und einem zweiten Variatorrad, der ein Riementrieb, bestehend aus einer ersten und einer zweiten Riemenscheibe, die durch einen Antriebsriemen verbunden sind, nachgeordnet ist.

Aus der DE 27 45 564 C2 geht eine derartige Antriebsvorrichtung einer selbstfahrenden Erntemaschine hervor, die eine als Riementrieb ausgebildete Anordnung mit einer Einrichtung zur stufenlosen Veränderung eines Übersetzungsverhältnisses umfasst. Dabei wird eine Antriebsbewegung einer Verbrennungskraftmaschine über einen ersten Riementrieb auf eine Antriebswelle und ausgehend hiervon über einen zweiten Riementrieb auf ein Variatorscheibe eines Riemenvariators übertragen, das über einen Riemen mit einer abtriebsseitigen Variatorscheibe in Verbindung steht, wobei ein wirksamer Durchmesser beider Variatorscheiben jeweils veränderbar ist. Im Falle der antriebsseitigen Variatorscheibe wird diese Durchmesserveränderung über eine hydraulische Einrichtung entsprechend den Vorgaben einer Bedienungsperson vorgenommen, während bei der abtriebsseitigen Variatorscheibe zwei axial zueinander bewegliche Kegelscheibenhälften über eine Druckfeder gegeneinander vorgespannt sind und je nach axialem Abstand der Kegelflächen zueinander den wirksamen Durchmesser der zweiten Variatorscheibe definieren. Dabei erfolgt die Veränderung des wirksamen Durchmessers an der abtriebsseitigen Variatorscheibe gegenläufig zu der Variation, die an der antriebsseitigen Variatorscheibe vorgenommen wird, indem aufgrund des konstanten Abstandes zwischen den Variatorscheiben und der gleichbleibenden Riemenlänge über die Druckfeder entsprechend der Riemenspannung ein entsprechender axialer Abstand zwischen den Kegelscheibenhälften eingestellt wird. Die abtriebsseitige Variatorscheibe steht dann im weiteren Verlauf über ein zwischenliegendes Untersetzungsgetriebe mit einer Antriebswelle eines Schrägförderers in Verbindung, wobei über dieses Untersetzungsgetriebe die an der abtriebsseitigen Variatorscheibe dargestellte Drehbewegung auf die Antriebswelle des Schrägförderers untersetzt wird. Zudem kann über das Untersetzungsgetriebe auch eine Drehrichtungsumkehr der Antriebswelle hinsichtlich der abtriebsseitigen Variatorscheibe dargestellt werden, so dass der Schrägförderer in eine zum Normalbetrieb umgekehrte Richtung fördert und durch den damit einhergehenden Rücklauf z.B. auftretende Verstopfungen im Schrägförderergehäuse beseitigt werden können. Die Antriebswelle des Schrägförderers trägt des Weiteren an einem freien Ende ein Kettenrad, über welches mittels eines Kettentriebes ein weiterer Antrieb angliederbar ist.

Ausgehend von dem vorstehend beschriebenen Stand der Technik ist es nun die Aufgabe der vorliegenden Erfindung, eine Antriebsvorrichtung für eine Baugruppe einer selbstfahrenden Erntemaschine zur Verfügung zu stellen, mittels welcher auf kompakte Art und Weise eine hohe Leistungsdichte erreichbar und gleichzeitig ein funktionssicherer Antrieb zugehöriger Elemente darstellbar ist. Zudem sollte eine vollvariable, stufenlose Drehzahlverstellung unter Last möglich sein.

Diese Aufgabe wird ausgehend vom Oberbegriff des Anspruchs 1 in Verbindung mit dessen kennzeichnenden Merkmalen gelöst. Die hierauf folgenden, abhängigen Ansprüche geben vorteilhafte Weiterbildungen der Erfindung wieder.

Gemäß der Erfindung weist eine Antriebsvorrichtung für eine aus einem Erntevorsatz und einem Schrägförderer bestehende Baugruppe einer selbstfahrenden Erntemaschine eine Anordnung auf, welche als Zugmitteltrieb ausgebildet ist und mit einer Einrichtung zur stufenlosen Veränderung eines Übersetzungsverhältnisses versehen ist. Zudem verfügt diese Antriebsvorrichtung noch über zumindest ein, der vorgenannten Anordnung nachgeschaltetes Untersetzungsgetriebe. Im Sinne der Erfindung kann es sich bei dem Erntevorsatz um ein Schneidwerk für Getreide oder aber auch um einen Maispflücker handeln, wobei das jeweils abgeerntete Erntegut über den nachfolgenden Schrägförderer dem dahinter liegenden Dreschwerk zugeführt wird.

Die Erfindung umfasst nun die technische Lehre, dass die Anordnung als ersten Zugmitteltrieb ein im Bereich einer Antriebsmaschine angeordnetes Variatorgetriebe mit einem von der Antriebsmaschine angetriebenen ersten Variatorrad und einem abtriebsseitigen zweiten Variatorrad aufweist, deren wirksamer Durchmesser jeweils stufenlos verstellbar ist. Des Weiteren wird dann von dem zweiten Variatorrad eine gleichachsig zu diesem angeordnete Antriebsscheibe eines zweiten Zugmitteltriebes angetrieben, die über ein Zugmittel trieblich mit mehreren Abtriebsscheiben verbunden ist. Die Abtriebsscheiben sind hierbei jeweils je einem Antrieb des Schrägförderers und des Erntevorsatzes zugeordnet. Zudem ist zwischen der jeweiligen Abtriebsscheibe und dem je einen Antrieb des Schrägförderers bzw. des Erntevorsatzes jeweils ein Untersetzungsgetriebe angeordnet.

Mit anderen Worten setzt sich also die erfindungsgemäße Antriebsvorrichtung aus einem ersten Zugmitteltrieb in Form eines Variatorgetriebes und einem zweiten Zugmitteltrieb zusammen, wobei eine Antriebsscheibe des zweiten Zugmitteltriebes zum einen drehfest mit einem abtriebsseitigen Variatorrad des Variatorgetriebes gekoppelt ist und zum anderen über einen Treibriemen mit mehreren Abtriebsscheiben in Verbindung steht. Das Variatorgetriebe ist dabei als Zugmitteltrieb mit einer stufenlos veränderbaren Übersetzung ausgestaltet, indem die wirksamen Durchmesser sowohl des antriebsseitigen Variatorrades als auch des abtriebsseitige Variatorrades jeweils im Durchmesser stufenlos verstellt werden können. Von den Abtriebsscheiben ist ferner eine mit einem Antrieb des Schrägförderers und eine mit dem Antrieb des Erntevorsatzes über ein jeweils zwischenliegendes Untersetzungsgetriebe gekoppelt, sowie beide Abtriebsscheiben in den zweiten Zugmitteltrieb eingebunden.

Im Rahmen der Erfindung handelt es sich bei der Antriebsmaschine dabei insbesondere um eine Verbrennungskraftmaschine. Des Weiteren werden die jeweiligen wirksamen Durchmesser der beiden Variatorräder des Variatorgetriebes bevorzugt über hydraulische Stellmittel verändert, im Sinne der Erfindung kann aber auch eine elektrische oder pneumatische Durchmesserverstellung vorgesehen werden. Schließlich ist neben einer Einbindung des Schrägförderers und des Erntevorsatzes auch eine Angliederung anderweitiger Baugruppen an der Antriebsvorrichtung denkbar, welche dann ausgehend vom Variatorgetriebe angetrieben werden. Als derartige weitere Baugruppe kommt beispielsweise ein am Strohauslass der Erntemaschine vorgesehener Anbauhäcksler in Betracht.

Die erfindungsgemäße Ausgestaltung einer Antriebsvorrichtung hat den Vorteil, dass durch die Anordnung des Variatorgetriebes im Bereich der Antriebsmaschine ein kompakter Aufbau möglich ist, indem mit dem Variatorgetriebe ein bauraumintensiver Teil in einem Bereich der selbstfahrenden Erntemaschine mit ausreichenden Platzverhältnissen vorgesehen ist. Denn im Bereich der Antriebsmaschine können die tendenziell großbauenden Variatorräder des Riemenvariators problemlos untergebracht werden, während der hiervon ausgehende zweite Zugmitteltrieb eine Antriebsbewegung dann mit geringen Abmessungen zum Schrägförderer und im weiteren Verlauf auch zum Erntevorsatz führt. Aufgrund der Positionierung des Variatorgetriebes im Bereich der Antriebsmaschine kann zudem auch ein leistungsstarkes Variatorgetriebe Anwendung finden, mit welchem eine stufenlose Übersetzung einer Antriebsdrehzahl auch unter Volllast möglich ist.

Ferner ist es durch die den Zugmitteltrieben jeweils nachgeschalteten Untersetzungsgetriebe möglich, die Antriebsleistung über das Variatorgetriebe und auch den zweiten Zugmitteltrieb mit hohen Umfangsgeschwindigkeiten zum jeweiligen Antrieb des Schrägförderers und des Erntevorsatzes zu führen und erst in diesem Bereich durch entsprechende Untersetzung die benötigten, hohen Drehmomente darzustellen. In der Folge sind über das Variatorgetriebe und den nachfolgenden zweiten Zugmitteltrieb vergleichsweise niedrigere Drehmomente zu übertragen, so dass Belastungen der Bauteile mit hohen Drehmomenten in diesem Bereich vermieden werden können. In der Folge können die Zugmitteltriebe kompakt bauender ausgeführt und damit der Platzbedarf bis zu den Antrieben des Schrägförderers und des Erntevorsatzes gering gehalten werden. Die Zuordnung jeweils eines Untersetzungsgetriebes zum Antrieb des Schrägförderers und auch zum Antrieb des Erntevorsatzes ermöglicht des Weiteren eine jeweils angepasste Untersetzung der über den vorgeschalteten Zugmitteltrieb eingebrachten Drehbewegung. So kann eine Übersetzung des dem Schrägförderer vorgeschalteten Untersetzungsgetriebes auf die Darstellung eines hierfür geeigneten Antriebsmoments ausgerichtet werden, während hinsichtlich des dem Erntevorsatz zugeordneten Untersetzungsgetriebes durch Wahl einer geeigneten Untersetzung auch ein funktionssicherer Antrieb von besonders leistungsstarken Vorsatzgeräten, wie insbesondere Maispflückern, sichergestellt werden kann.

Im Unterschied hierzu ist bei der DE 27 45 564 C2 der Riemenvariator im Bereich des Schrägförderers angeordnet, so dass auch in diesem Bereich ein entsprechender Platzbedarf zur Unterbringung der großbauenden Variatorräder vorzusehen ist. Ferner ist abtriebsseitig des Riemenvariators nur ein Untersetzungsgetriebe sowohl für den Schrägförderer als auch für nachfolgende Antriebe weiterer Arbeitsgerätschaften vorgesehen, so dass hierbei ein entsprechender Kompromiss hinsichtlich der Untersetzung der Drehbewegung einzugehen ist. So ist entweder im Hinblick auf die Verwendung von Erntevorsätzen, wie Maispflücker, eine entsprechend starke Untersetzung darzustellen, um das erforderliche Antriebsmoment aufbringen zu können, oder aber die Umfangsgeschwindigkeit der davor liegenden Zugmitteltriebe zu verringern, um das Antriebsmoment schon in den Zugmitteltrieben zu erhöhen, wodurch Bauteile der davorliegenden Zugmitteltriebe aber entsprechend größer auszuführen sind. Entsprechend einer Ausführungsform der Erfindung sind sowohl das erste als auch das zweite Variatorrad des Riemenvariators als Kegelscheibenvariatoren ausgebildet, die gegenläufig verstellt werden. Eine derartige Ausgestaltung hat dabei den Vorteil, dass der effektive Durchmesser des jeweiligen Variatorrades auf einfache und präzise Art und Weise verstellt werden kann, indem die beiden Kegelscheiben axial über eine entsprechende Steuerung zueinander verschoben und damit der Durchmesser, auf welchem der Riemen abläuft, verändert wird.

Das Zugmittel des zweiten Zugmitteltriebes treibt sowohl eine Abtriebsscheibe des Schrägförderers als auch eine Abtriebsscheibe des Erntevorsatzes an. Die beiden Abtriebsscheiben werden also ausgehend von der Antriebsscheibe des zweiten Zugmitteltriebes über ein gemeinsames Zugmittel angetrieben, so dass auch eine Anordnung der beiden Abtriebsscheiben in einer gemeinsamen Ebene mit der Antriebsscheibe und damit in einer Flucht möglich ist, was einen entsprechend kompakten Aufbau zur Folge hat.

Gemäß einer weiteren, vorteilhaften Ausgestaltung der Erfindung ist das jeweils eine Untersetzungsgetriebe als einstufiges Umlaufrädergetriebe ausgebildet. Hierdurch ist bei einem kompakten Aufbau auch eine hohe Untersetzung der Drehbewegung der jeweils zugehörigen Abtriebsscheibe auf den Antrieb des Schrägförderers bzw. des Erntevorsatzes möglich. Bevorzugt ist hierbei je ein Planetenradträger des jeweiligen Umlaufrädergetriebes als Abtriebselement ausgebildet, welches mit dem je einen Antrieb des Schrägförderers bzw. des Erntevorsatzes in Verbindung steht. Des Weiteren ist je ein Sonnenrad des jeweiligen Umlaufrädergetriebes drehfest mit der je zugeordneten Abtriebsscheibe verbunden, während ein Hohlrad stillstehend mit einem jeweiligen Getriebegehäuse des jeweiligen Umlaufrädergetriebes gekoppelt ist.

Entsprechend einer hierzu alternativen Ausgestaltung ist das jeweils eine Untersetzungsgetriebe als einstufiges Stufengetriebe ausgebildet. Bevorzugt ist die je zugeordnete Abtriebsscheibe dabei drehfest mit je einem koaxial liegenden, antriebsseitigen Zahnrad des jeweiligen Stufengetriebes gekoppelt, welches mit je einem abtriebsseitigen Zahnrad kämmt. Dieses abtriebsseitige Zahnrad ist als Abtriebselement ausgebildet, welches mit dem je einen Antrieb des Schrägförderers bzw. des Erntevorsatzes in Verbindung steht. Hierbei liegen dann An- und Abtrieb entsprechend achsversetzt zueinander, wobei durch entsprechende Wahl des Zähnezahlverhältnisses der beiden Zahnräder eine starke Untersetzung der Drehbewegung möglich ist.

Im Sinne der Erfindung ist es hierbei denkbar, von den beiden Untersetzungsgetrieben eines als Umlaufrädergetriebe und eines als Stufengetriebe auszuführen, oder aber auch beide jeweils als Umlaufrädergetriebe oder als Stufengetriebe auszugestalten.

Erfindungsgemäß ist zudem zwischen dem jeweils einen Untersetzungsgetriebe und dem je einen Antrieb des Schrägförderers bzw. des Erntevorsatzes jeweils eine Lamellenkupplung vorgesehen. Diese Lamellenkupplung dient dabei als Überlastkupplung, welche im Falle zu hoher abtriebsseitiger Belastungen eine jeweilige Verbindung zum Antrieb durch Durchrutschen unterbricht und damit eine Beschädigung von Bauteilen des Schrägförderers bzw. des Erntevorsatzes verhindert. Insbesondere ist diese jeweilige Lamellenkupplung dabei als nasslaufende Lamellenkupplung ausgestaltet, welche in ein jeweiliges Gehäuse des jeweiligen Untersetzungsgetriebes integriert ist. Auf diese Art und Weise wird eine belastbare Überlastkupplung ausgebildet, welche zudem hinreichend vor äußeren Beeinträchtigungen geschützt ist.

In Weiterbildung der Erfindung ist das Variatorgetriebe als Riemenvariator ausgestaltet. Im Rahmen der Erfindung kommt jedoch auch eine anderweitige Ausführung in Betracht, beispielsweise als Variator mit einem Schubgliederband, einer Laschenkette, etc.. Ferner ist der zweite Zugmitteltriebe als Riementrieb mit einem Triebriemen ausgeführt, wobei auch hier eine alternative Ausgestaltung, zum Beispiel als Kettentrieb, möglich ist.

Weitere, vorteilhafte Ausgestaltungen der Erfindung ergeben sich aus der nachfolgenden Beschreibung einer bevorzugten Ausführungsform der Erfindung, die Bezug auf die in den Zeichnungen dargestellten Figuren nimmt. Es zeigen:
- Fig. 1: eine perspektivische Ansicht einer erfindungsgemäßen Antriebsvorrichtung einer selbstfahrenden Erntemaschine;
- Fig. 2: eine Schnittansicht eines Untersetzungsgetriebes der Antriebsvorrichtung aus Fig. 1; und
- Fig. 3: eine Schnittansicht eines weiteren Untersetzungsgetriebes der Antriebsvorrichtung aus Fig. 1.

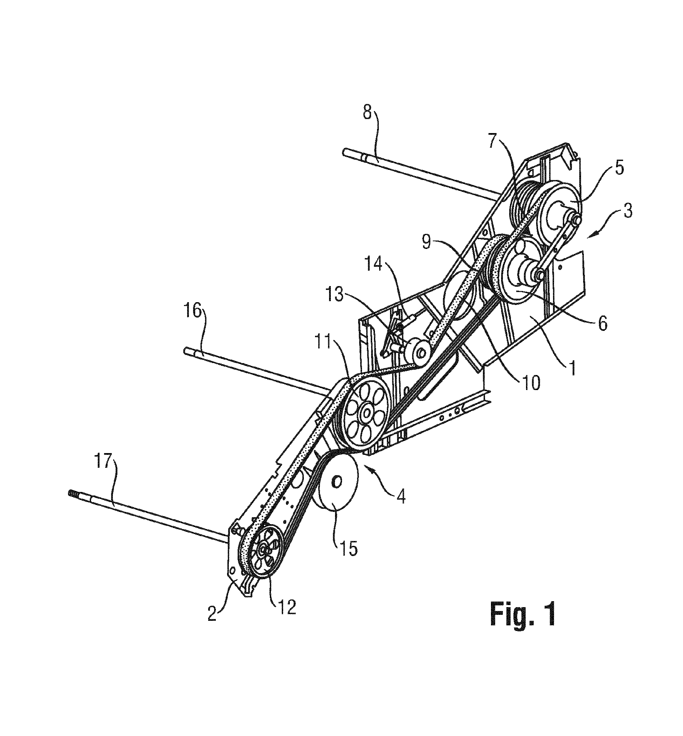

In Fig. 1 ist eine perspektivische Ansicht einer erfindungsgemäßen Antriebsvorrichtung dargestellt, über welche ein Schrägförderer und ein Erntevorsatz einer selbstfahrenden Erntemaschine angetrieben werden können. Bei dem Erntevorsatz kann es sich dabei um ein Schneidwerk für Getreide oder aber auch um einen Maispflücker handeln, wobei das von dem der Erntevorsatz aufgenommene Erntegut dann auf dem Fachmann bekannte Art und Weise über den nachfolgenden Schrägförderer einem Dreschwerk der selbstfahrenden Erntemaschine zugeführt wird. Hierzu wird über den Schrägförderer mittels eines Kettenförderers das jeweils abgeerntete Erntegut zu dem nachgeschalteten Dreschwerk gefördert.

Wie vorliegend aus Fig. 1 ersichtlich ist, ist die erfindungsgemäße Antriebsvorrichtung als Zugmitteltrieb ausgestaltet, welcher seitlich an einem Maschinengehäuse 1, sowie einem Schrägförderergehäuse 2 vorgesehen ist. Die Antriebsvorrichtung setzt sich hierbei aus einem Riemenvariator als ersten Riementrieb 3, sowie einem hierauf folgenden zweiten Zugmitteltrieb 4 zusammen. Der Riemenvariator 3 ist dabei durch ein erstes, antriebsseitiges Variatorrad 5 und ein zweites, abtriebsseitiges Variatorrad 6 gebildet, wobei das erste Variatorrad 5 und das zweite Variatorrad 6 über einen Riemen 7 miteinander in Verbindung stehen. Eine Drehbewegung des ersten Variatorrades 5 kann nun mit einer stufenlos veränderlichen Übersetzung auf das zweite Variatorrad 6 übertragen werden, indem sowohl ein wirksamer Durchmesser des ersten Variatorrades 5 als auch ein wirksamer Durchmesser des zweiten Variatorrades 6 jeweils stufenlos verstellt werden. Hierbei wird eine gegenläufige Verstellung vorgenommen, so dass eine Vergrößerung des wirksamen Durchmessers des ersten Variatorrades 5 mit einer gleichzeitigen Verkleinerung des wirksamen Durchmessers des zweiten Variatorrades 6 und umgekehrt einhergeht. In der Folge wird bei gleichbleibendem Abstand zwischen den Variatorrädern 5 und 6 und konstanter Länge des Riemens 7 durch die Veränderung der wirksamen Durchmesser, d.h. der jeweiligen Durchmesser, auf welchen der Riemen 7 seitens des ersten Variatorrades 5 und seitens des zweiten Variatorrades 6 jeweils läuft, jeweils ein zugehöriges Übersetzungsverhältnis definiert.

Vorliegend sind die beiden Variatorräder 5 und 6 dabei jeweils als Kegelscheibenvariatoren ausgebildet, welche sich aus jeweils zwei axial zueinander beweglichen Kegelscheiben zusammensetzen, wobei der axiale Abstand der Kegelflächen zueinander den jeweils wirksamen Durchmesser definiert. Eine Verstellung dieses axialen Abstandes wird vorliegend über ein - nicht weiter dargestelltes - hydraulisches Steuersystem vorgenommen, wobei aber ebenso gut auch eine elektrische oder pneumatische Verstellung denkbar ist. Das antriebsseitige, erste Variatorrad 5 ist im vorliegenden Fall mit einer Hauptvorgelegewelle 8 gekoppelt, welche über eine - ebenfalls nicht dargestellte - Antriebsmaschine der selbstfahrenden Erntemaschine angetrieben wird, wobei es sich bei dieser Antriebsmaschine insbesondere um eine Verbrennungskraftmaschine handelt. In der Folge wird auch das erste Variatorrad 5 über die Antriebsmaschine angetrieben und läuft mit einer einer Drehbewegung der Hauptvorgelegewelle 8 entsprechenden Drehzahl.

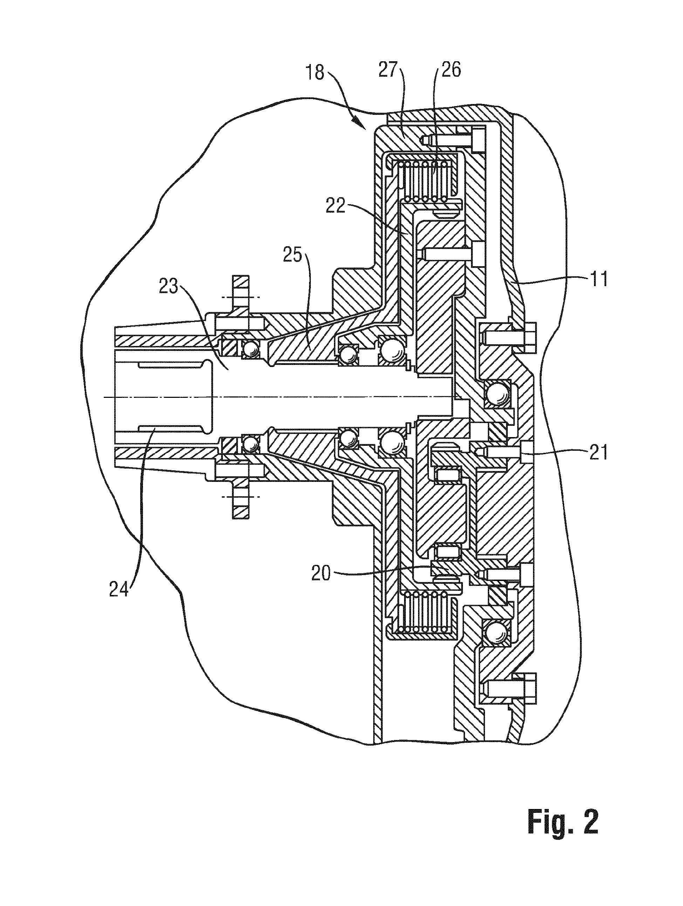

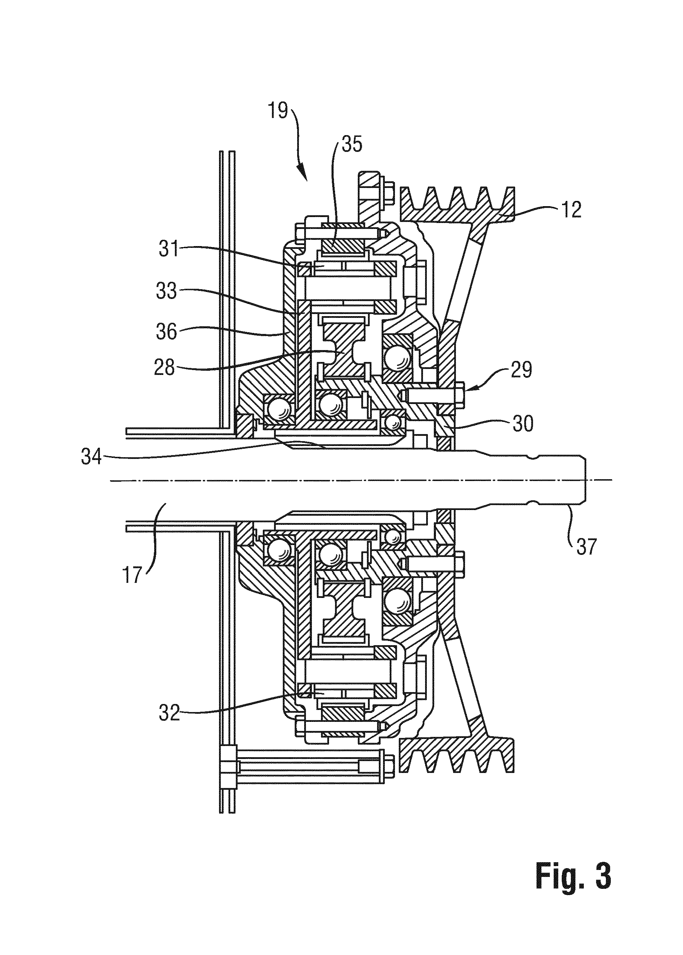

Abtriebsseitig des Riemenvariators 3 und gleichachsig zum zweiten Variatorrad 6 ist eine Antriebsscheibe 9 des zweiten Zugmitteltriebes 4 vorgesehen, welche in ihrer Drehbewegung starr mit dem zweiten Variatorrad 6 gekoppelt ist. Die Antriebsscheibe 9 führt dabei einen Treibriemen 10, welcher als Keilriemen ausgeführt ist und die Antriebsscheibe 9 sowohl mit einer Abtriebsscheibe 11 als auch mit einer Abtriebsscheibe 12 jeweils trieblich verbindet. Eine ausreichende Riemenspannung des Treibriemens 10 wird dabei über eine zwischen der Antriebsscheibe 9 und der Abtriebsscheibe 11 liegende Spannrolle 13 gewährleistet, welche sich über ein Spannsystem 14 am Maschinengehäuse 1 abstützt, während eine zwischen den Abtriebsscheiben 11 und 12 liegende Umlenkrolle 15 für eine ausreichende Umschlingung sowohl der Abtriebsscheibe 11 als auch der Abtriebsscheibe 12 durch den Treibriemen 10 sorgt. Die Abtriebsscheibe 11 ist dabei einem Antrieb des Schrägförderers in Form einer oberen Schrägfördererwelle 16 zugeordnet, wohingegen die Abtriebsscheibe 12 mit einer Schnittstelle zu einem Antrieb des Erntevorsatzes in Verbindung steht, welche im vorliegenden Fall durch eine Antriebswelle 17 gebildet wird, über die eine Leistung an beiden Seiten des Schrägförderergehäuses 2 an den jeweils angeschlossenen Erntevorsatz übertragbar ist. Zwischen der Abtriebsscheibe 11 und der oberen Schrägfördererwelle 16 und auch zwischen der Abtriebsscheibe 12 und der Antriebswelle 17 ist dabei jeweils ein Untersetzungsgetriebe 18 bzw. 19 vorgesehen, dessen jeweiliger Aufbau und Anordnung aus der zugehörigen Schnittansicht in Fig. 2 bzw. Fig. 3 hervorgeht.

Wie nun aus der Schnittansicht in Fig. 2 ersichtlich ist, ist das Untersetzungsgetriebe 18 vorliegend als einstufiges Stufengetriebe ausgebildet, dessen antriebsseitiges Zahnrad 20 koaxial zu der Abtriebsscheibe 11 liegt und hierbei drehfest mit der Abtriebsscheibe 11 über Schraubverbindungen 21 gekoppelt ist. Im weiteren Verlauf kämmt das antriebsseitige Zahnrad 20 dann mit einem abtriebsseitigen Zahnrad 22, welches als Hohlrad ausgeführt mit dem achsversetzt liegenden Zahnrad 20 an einem Innendurchmesser im Zahneingriff steht und drehbar auf einer Welle 23 gelagert ist. Über die Welle 23 wird im weiteren Verlauf über eine Keilwellenverzahnung 24 eine Verbindung zu der oberen Schrägfördererwelle 16 hergestellt. Das Zahnrad 22 steht nun mit der Welle 23 über eine drehfest auf der Welle 23 angeordnete Kupplungsscheibe 25, sowie eine zwischenliegende, nasslaufende Lamellenkupplung 26 in Verbindung. Die nasslaufende Lamellenkupplung 26 ist dabei als Überlastkupplung ausgestaltet, deren Innenlamellen mit dem Außenumfang des Hohlrades 22 und deren Außenlamellen mit der Kupplungsscheibe 25 jeweils verbunden sind und über ein Federelement in Form einer Tellerfeder aufeinandergedrückt werden. In der Folge wird im Normalbetrieb eine Drehbewegung des Hohlrades 22 über die Lamellenkupplung 26 auf die Kupplungsscheibe 25 und damit auch auf die Welle 23 übertragen. Kommt es jedoch zu einem Überlastfall, beispielsweise aufgrund eines Blockierens der Einzugskette des Schrägförderers, so öffnet die Lamellenkupplung 26, wobei dann in der Folge eine Übertragung der Drehbewegung vom Zahnrad 22 auf die Welle 23 unterbrochen ist. Die Lamellenkupplung 26 ist gemeinsam mit den Zahnrädern 20 und 22 in einem Gehäuse 27 des Untersetzungsgetriebes 18 aufgenommen und wird über im Innenraum des Gehäuses 27 befindliches Öl versorgt.
Aus Fig. 3 geht nun eine Schnittansicht des Untersetzungsgetriebes 19 im Bereich der Abtriebsscheibe 12 hervor, welches hierbei zwischen der Abtriebsscheibe 12 und der Antriebswelle 17 angeordnet ist. Dieses Untersetzungsgetriebe ist dabei als einstufiges Umlaufrädergetriebe ausgebildet, dessen Sonnenrad 28 über Schraubverbindungen 29 und einen zwischenliegenden Hohlwellenabschnitt 30 mit der Abtriebsscheibe 12 verbunden ist, während ein, mehrere Planetenräder 31 und 32 führender Planetenradträger 33 in seiner Drehbewegung mit der Antriebswelle 17 über eine Keilwellenverzahnung 34 verbunden ist. Des Weiteren ist ein Hohlrad 35 des Untersetzungsgetriebes 19 mit einem Gehäuse 36 des Untersetzungsgetriebes 19 verschraubt. In der Folge wird eine Drehbewegung der Abtriebsscheibe 12 über das Sonnenrad 28 auf die Planetenräder 31 und 32 übertragen, welche in der Folge auf dem Hohlrad 35 abrollen und dementsprechend eine Drehbewegung des Planetensteges 33 und damit auch der Antriebswelle 17 bewirken. Die Antriebswelle 17 bildet ferner im rückwärtigen Bereich der Abtriebsscheibe 12 ein Zahnwellenprofil 37 aus, über welches auf Seiten der Abtriebsscheibe 12 eine Anbindung an den Antrieb des Erntevorsatzes hergestellt werden kann.

Eine jeweilige Untersetzung der beiden Untersetzungsgetriebe 18 und 19 ist im vorliegenden Fall dabei derartig gewählt, dass hohe Umfangsgeschwindigkeiten des zweiten Zugmitteltriebes 4 in ein ausreichendes Drehmoment zum Antrieb der oberen Schrägfördererwelle 16 bzw. der Antriebswelle 17 des Erntevorsatzes umgesetzt werden. In der Folge wird damit eine hohe Leistungsdichte im begrenzten Bauraum erreicht. Insbesondere hinsichtlich des Untersetzungsgetriebes 19 wird dabei ein ausreichendes Antriebsmoment zum Antrieb auch leistungsstarker Erntevorsatzgeräte, wie beispielsweise Maispflücker, zur Verfügung gestellt, wobei aufgrund der Ausgestaltung als einstufiges Umlaufrädergetriebe dies auf kompaktem Bauraum stattfindet. Ferner ist der Riemenvariator 3 ebenfalls leistungsstark ausgeführt, so dass eine stufenlose Übersetzung der über die Hauptvorgelegewelle 8 eingeleiteten Drehbewegung auch unter Volllast möglich ist.

Insgesamt kann damit eine Antriebsvorrichtung einer selbstfahrenden Erntemaschine ausgestaltet werden, welche auf kompaktem Bauraum einen funktionssicheren Antrieb gewährleistet und dabei eine hohe Leistungsdichte zur Verfügung stellt.

### Bezugszeichenliste

| | | | |
|---|---|---|---|
| 1 | Maschinengehäuse | 31 | Planetenrad |
| 2 | Schrägförderergehäuse | 32 | Planetenrad |
| 3 | Riemenvariator | 33 | Planetenradträger |
| 4 | Zweiter Zugmitteltrieb | 34 | Keilwellenverzahnung |
| 5 | Erstes Variatorrad | 35 | Hohlrad |
| 6 | Zweites Variatorrad | 36 | Gehäuse |
| 7 | Riemen | 37 | Zahnwellenprofil |
| 8 | Hauptvorgelegewelle | | |
| 9 | Antriebsscheibe | | |
| 10 | Treibriemen | | |
| 11 | Abtriebsscheibe | | |
| 12 | Abtriebsscheibe | | |
| 13 | Spannrolle | | |
| 14 | Spannsystem | | |
| 15 | Umlenkrolle | | |
| 16 | Obere Schrägfördererwelle | | |
| 17 | Antriebswelle | | |
| 18 | Untersetzungsgetriebe | | |
| 19 | Untersetzungsgetriebe | | |
| 20 | Zahnrad | | |
| 21 | Schraubverbindung | | |
| 22 | Zahnrad | | |
| 23 | Welle | | |
| 24 | Keilwellenverzahnung | | |
| 25 | Kupplungsscheibe | | |
| 26 | Lamellenkupplung | | |
| 27 | Gehäuse | | |
| 28 | Sonnenrad | | |
| 29 | Schraubverbindung | | |
| 30 | Hohlwellenabschnitt | | |

## Patentansprüche

1. Antriebsvorrichtung für eine aus einem Erntevorsatz und einem Schrägförderer bestehende Baugruppe einer selbstfahrenden Erntemaschine, die eine als Zugmitteltrieb ausgebildete Anordnung mit einer Einrichtung zur stufenlosen Veränderung eines Übersetzungsverhältnisses sowie zumindest ein diesem nachgeschaltetes Untersetzungsgetriebe (18, 19) aufweist,
**dadurch gekennzeichnet,**
**dass** die Anordnung als ersten Zugmitteltrieb ein im Bereich einer Antriebsmaschine angeordnetes Variatorgetriebe mit einem von der Antriebsmaschine angetriebenen ersten Variatorrad (5) und einem abtriebsseitigen zweiten Variatorrad (6) aufweist, deren wirksamer Durchmesser jeweils stufenlos verstellbar ist, dass von dem zweiten Variatorrad (6) eine gleichachsig zu diesem angeordnete Antriebsscheibe (9) eines zweiten Zugmitteltriebes (4) antreibbar ist, die über ein Zugmittel trieblich mit mehreren Abtriebsscheiben (11, 12) verbunden ist, wobei die Abtriebsscheiben (11, 12) je einem Antrieb des Schrägförderers und je einem Antrieb des Erntevorsatzes zugeordnet sind, und dass zwischen der jeweiligen Abtriebsscheibe (11, 12) und dem je einen Antrieb des Schrägförderers bzw. des Erntevorsatzes jeweils ein Untersetzungsgetriebe (18, 19) angeordnet ist.

2. Antriebsvorrichtung nach Anspruch 1, **dadurch gekennzeichnet, dass** sowohl das erste (5) als auch das zweite Variatorrad (6) als Kegelscheibenvariatoren ausgebildet sind, die gegenläufig verstellt werden.

3. Antriebsvorrichtung nach Anspruch 1, **dadurch gekennzeichnet, dass** das jeweils eine Untersetzungsgetriebe (19) als einstufiges Umlaufrädergetriebe ausgebildet ist.

4. Antriebsvorrichtung nach Anspruch 3, **dadurch gekennzeichnet, dass** je ein Planetenradträger (33) des jeweiligen Umlaufrädergetriebes als Abtriebselement ausgebildet ist, welches mit dem je einen Antrieb des Schrägförderers bzw. des Erntevorsatzes in Verbindung steht, während je ein Sonnenrad (28) des jeweiligen Umlaufrädergetriebes mit der je zugeordneten Abtriebsscheibe (12) und je ein Hohlrad (35) drehfest mit je einem Gehäuse (36) des jeweiligen Umlaufrädergetriebes verbunden ist.

5. Antriebsvorrichtung nach Anspruch 1, **dadurch gekennzeichnet, dass** das jeweils eine Untersetzungsgetriebe (18) als einstufiges Stufengetriebe ausgebildet ist.

6. Antriebsvorrichtung nach Anspruch 5, **dadurch gekennzeichnet, dass** die je zugeordnete Abtriebsscheibe (11) drehfest mit je einem koaxial liegenden, antriebsseitigen Zahnrad (20) des jeweiligen Stufengetriebes gekoppelt ist, welches mit je einem abtriebsseitigen Zahnrad (22) des jeweiligen Stufengetriebes kämmt, wobei das je eine abtriebsseitige Zahnrad (22) als Abtriebselement ausgebildet ist, welches mit dem je einen Antrieb des Schrägförderers bzw. des Erntevorsatzes in Verbindung steht.

7. Antriebsvorrichtung nach Anspruch 1, **dadurch gekennzeichnet, dass** zwischen dem jeweils einen Untersetzungsgetriebe (18) und dem je einen Antrieb des Schrägförderers bzw. des Erntevorsatzes jeweils eine Lamellenkupplung (26) vorgesehen ist.

8. Antriebsvorrichtung nach Anspruch 7, **dadurch gekennzeichnet, dass** die jeweils eine Lamellenkupplung (26) als nasslaufende Lamellenkupplung ausgestaltet ist, welche in ein jeweiliges Gehäuse (27) des jeweiligen Untersetzungsgetriebes (18) integriert ist.

9. Antriebsvorrichtung nach Anspruch 1, **dadurch gekennzeichnet, dass** das Variatorgetriebe als Riemenvariator (3) ausgestaltet ist, wohingegen der zweite Zugmitteltrieb (4) als Riementrieb mit einem Treibriemen (10) ausgeführt ist.

## Claims

1. A drive apparatus for an assembly, comprising a harvesting header and an inclined conveyor, of a self-propelled harvester which has an arrangement in the form of a traction transmission having a device for steplessly changing a transmission ratio and at least one reduction transmission (18, 19) connected downstream thereof,
**characterised in that**
the arrangement as the first traction transmission has a variator transmission which is arranged in the region of a drive machine and has a first variator wheel (5) driven by the drive machine and a second variator wheel (6) at the drive output side, the operative diameter of which is respectively steplessly adjustable, that a drive pulley (9) of a second traction transmission (4), that is arranged coaxially with the second variator wheel (6) and is drivingly connected to a plurality of drive output pulleys (11, 12) by way of a traction means is drivable by the second variator wheel (6), wherein the drive output pulleys (11, 12) are respectively associated with the drive of the inclined conveyor and a drive of the harvesting header, and that arranged between the respective drive output pulleys (11, 12) and the one respective drive of the inclined conveyor or the harvesting header is a respective reduction transmission (18, 19).

2. A drive apparatus according to claim 1 **characterised in that** both the first (5) and also the second variator wheel (6) are in the form of cone pulley variators which are adjusted in opposite relationship.

3. A drive apparatus according to claim 1 **characterised in that** the respective one reduction transmission (19) is in the form of a one-stage epicyclic transmission.

4. A drive apparatus according to claim 3 **characterised in that** a respective planet gear carrier (33) of the respective epicyclic transmission is in the form of a drive output element connected to the respective one drive of the inclined conveyor or the harvesting header respectively while a respective sun gear (28) of the respective epicyclic transmission is connected to the respectively associated drive output pulley (12) and a respective ring gear (35) is non-rotatably connected to a respective housing (36) of the respective epicyclic transmission.

5. A drive apparatus according to claim 1 **characterised in that** the respective one reduction transmission (18) is in the form of a one-stage step transmission.

6. A drive apparatus according to claim 5 **characterised in that** the respectively associated drive output pulley (11) is non-rotatably coupled to a respective coaxially disposed drive-side gear (20) of the respective step transmission, which meshes with a respective drive output-side gear (22) of the respective step transmission, wherein the respective one drive output-side gear (22) is in the form of a drive output element connected to the respective one drive of the inclined conveyor and the harvesting header respectively.

7. A drive apparatus according to claim 1 **characterised in that in that** provided between the respective one reduction transmission (18) and the respective one drive of the inclined conveyor and the harvesting header respectively is a respective plate clutch (26).

8. A drive apparatus according to claim 7 **characterised in that** the respective one plate clutch (26) is in the form of a wet plate clutch integrated into a respective housing (27) of the respective reduction transmission (18).

9. A drive apparatus according to claim 1 **characterised in that** the variator transmission is in the form of a belt variator (3) whereas the second traction transmission (4) is in the form of a belt transmission with a drive belt (10).

## Revendications

1. Dispositif d'entraînement d'un sous-groupe d'une machine de récolte automotrice constitué d'un outil frontal et d'un convoyeur, ledit dispositif comportant un agencement conformé en mécanisme d'entraînement en traction et muni d'un dispositif de variation continue d'un rapport de multiplication ainsi qu'au moins un réducteur (18, 19) disposé en aval, **caractérisé en ce que** l'agencement comporte comme premier mécanisme d'entraînement en traction un variateur disposé dans la zone d'une machine d'entraînement et associé à une première roue de variateur (5) entraînée par la machine d'entraînement et à une seconde roue de variateur côté mené (6), les diamètres utiles respectifs des roues étant réglables en continu, **en ce que** la seconde roue de variateur (6) peut entraîner une poulie d'entraînement (9) d'un second mécanisme d'entraînement en traction (4) qui est disposée sur le même axe qu'elle et qui, par l'intermédiaire d'un moyen de traction, est reliée de manière motrice à plusieurs poulies menées (11, 12), les poulies menées (11, 12) étant associées respectivement à un moyen d'entraînement du convoyeur et à un moyen d'entraînement de l'outil frontal, et **en ce qu'**entre chacune des poulies menées (11, 12) et le convoyeur et, respectivement, l'outil frontal est disposé un réducteur (18, 19).

2. Dispositif d'entraînement selon la revendication 1, **caractérisé en ce qu'**aussi bien la première (5) que la seconde roue de variateur (6) sont conformées en variateurs à poulie à cônes qui sont déplacés en sens opposés.

3. Dispositif d'entraînement selon la revendication 1, **caractérisé en ce qu'**un réducteur (19) est conformé en engrenage planétaire monoétage.

4. Dispositif d'entraînement selon la revendication 3, **caractérisé en ce qu'**à chaque fois un porte-planétaire (33) de l'engrenage planétaire est conformé en élément mené qui est en liaison avec un moyen d'entraînement du convoyeur, respectivement de l'outil frontal, tandis qu'un pignon solaire (28) de l'engrenage planétaire est solidarisé avec la poulie menée associée (12), et une roue à denture intérieure (35) est solidarisé en rotation à un carter (36) de l'engrenage planétaire.

5. Dispositif d'entraînement selon la revendication 1, **caractérisé en ce que** le réducteur (18) est conformé en transmission étagée monoétage.

6. Dispositif d'entraînement selon la revendication 5, **caractérisé en ce que** la poulie menée associée (11) est couplée de manière solidaire en rotation à une roue dentée coaxiale côté menant (20) de la transmission étagée, ladite roue dentée s'engrenant avec une roue dentée côté mené (22), la roue dentée côté mené (22) étant conformée en élément mené qui est en liaison avec un moyen d'entraînement du convoyeur, respectivement de l'outil frontal.

7. Dispositif d'entraînement selon la revendication 1, **caractérisé en ce qu'**entre un réducteur (18) et un moyen d'entraînement du convoyeur, respectivement de l'outil frontal est prévu à chaque fois un accouplement à disques multiples (26) .

8. Dispositif d'entraînement selon la revendication 7, **caractérisé en ce que** l'accouplement à disques multiples (26) est conçu sous la forme d'un accouplement à disques multiples de type humide qui est intégré dans un carter correspondant (27) du réducteur correspondant (18).

9. Dispositif d'entraînement selon la revendication 1, **caractérisé en ce que** le variateur mécanique est conformé en variateur à courroie (3), tandis que le second mécanisme d'entraînement en traction (4) est conformé en entraînement à courroie avec une courroie d'entraînement (10).
